(19) **Europäisches Patentamt / European Patent Office / Office européen des brevets**

(11) **EP 4 479 446 B1**

(12) ## EUROPEAN PATENT SPECIFICATION

(45) Date of publication and mention
of the grant of the patent:
**26.11.2025 Bulletin 2025/48**

(51) International Patent Classification (IPC):
**C08F 210/06** (2006.01)    **C08L 23/14** (2006.01)
**F16L 9/12** (2006.01)

(21) Application number: **23700865.1**

(22) Date of filing: **16.01.2023**

(52) Cooperative Patent Classification (CPC):
(C-Sets available)
**C08F 210/06; C08L 23/14; F16L 9/12;**
C08F 2410/06; C08L 2203/18; C08L 2205/025
(Cont.)

(86) International application number:
**PCT/EP2023/050857**

(87) International publication number:
**WO 2023/156103 (24.08.2023 Gazette 2023/34)**

(54) **PIPES AND POLYPROPYLENE COMPOSITION FOR THE MANUFACTURE THEREOF**

ROHRLEITUNGEN UND POLYPROPYLENZUSAMMENSETZUNG ZU DEREN HERSTELLUNG

TUYAUX ET COMPOSITION DE POLYPROPYLÈNE POUR LEUR FABRICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.02.2022 EP 22157216**

(43) Date of publication of application:
**25.12.2024 Bulletin 2024/52**

(73) Proprietor: **Basell Poliolefine Italia S.r.l.
20121 Milano (IT)**

(72) Inventors:
• **GALVAN, Monica
44122 Ferrara (IT)**
• **BOCCHINO, Marco
44122 Ferrara (IT)**
• **CAVALIERI, Claudio
44122 Ferrara (IT)**

(74) Representative: **LyondellBasell
c/o Basell Poliolefine Italia
Intellectual Property
P.le Donegani 12
44122 Ferrara (IT)**

(56) References cited:
EP-A1- 2 653 496        WO-A1-2020/069828
WO-A1-2021/151840        US-A1- 2018 030 256

(52) Cooperative Patent Classification (CPC): (Cont.)

C-Sets
**C08F 210/06, C08F 2/001;**
**C08F 210/06, C08F 4/6465;**
**C08F 210/06, C08F 4/651;**
**C08F 210/06, C08F 4/6545;**

**C08L 23/14, C08L 23/14;**
C08F 210/06, C08F 210/14, C08F 2500/12,
C08F 2500/27, C08F 2500/34, C08F 2500/35;
C08F 210/06, C08F 210/16, C08F 210/14,
C08F 2500/12, C08F 2500/35, C08F 2500/17;
C08F 210/06, C08F 210/16, C08F 210/14,
C08F 2500/27, C08F 2500/36

**Description**

FIELD OF THE INVENTION

The present disclosure relates to polypropylene based composition containing 1-hexene derived units and the use of said composition for the production of pipes. In particular chlorine resistant pipes.

BACKGROUND OF THE INVENTION

Polymer materials are frequently used for manufacturing pipes for various purposes, such as fluid transport, during which the fluid may be non-pressurised or pressurised. Polyolefin compositions are prone to degradation during processing and end use. Especially degradation occurs, when the material is exposed to certain environmental conditions such as high energy radiation (e.g. UV exposure), mechanical shear and high temperatures. Furthermore, chlorine containing water also has negative effects on the polymer when being transported in polypropylene pipes. For these reasons, the polymers have reduced lifetimes and ageing properties.

Degradation proceeds in radical mechanism, and will finally destroy the polymer properties. The polyolefins are going through an ageing process. Usually the initializing step of the degradation process is the loss of a hydrogen atom from the polymer chain. This polymer free radical (R*) can react with an oxygen (O2) molecule to form a peroxy radical (ROO*) which will in turn abstract another hydrogen atom from another polymer chain to form a hydroperoxide (ROOH). The hydroperoxide can split into two new free radicals (RO*) and (*OH), which continue to propagate the reaction to other polyolefin molecules.

In polyolefins the attack from free radicals can result in chain scission. One way to interrupt this process is to add an antioxidant into the composition.

The applicant found a particular polypropylene composition able to reduce the degradation due to the chlorine without the adding of antioxidant.

WO-A1-2020/069828 relates to pipes comprising a resin formed from:a polypropylene composition comprising:

A) from 88.0 wt. % to 98.0 wt. %, of a copolymer of propylene containing from 0.8 wt. % to 4.8 wt. % of 1-hexene derived units; said random copolymers of propylene having:
a Melt Flow Rate: measured according to ISO 1133 (230 °C, 5 Kg) ranging from 0.5 to 4.4 g/10 min;

B) from 2.0 wt. % to 12.0 wt. % of a terpolymer of propylene ethylene and 1-hexene having a content of ethylene derived units ranging from 35 wt. % to 60 wt. %; and a content of 1-hexene derived units ranging from 1 wt. % to 6 wt. %.

This document does not relates to chlorine resistance of the composition.

The applicant found that it is possible to improve the chlorine resistance in a pipe by using a polypropylene composition comprising a propylene 1-hexene copolymer and a propylene ethylene, 1-hexene terpolymer having particular features.

SUMMARY OF INVENTION

Thus an object of the present disclosure is a polypropylene composition comprising:

A) from 91 wt% to 97 wt% of a copolymer of propylene containing from 0.8 wt. % to 4.8 wt. % of 1-hexene derived units; said random copolymers of propylene and 1-hexene having a Melt Flow Rate: measured according to ISO 1133 (230 °C, 5 Kg) ranging from 0.5 to 4.4 g/10 min;
B) from 3 wt. % to 9 wt. % of a terpolymer of propylene, ethylene and 1-hexene having a content of ethylene derived units ranging from 20.0 wt. % to 30.0 wt. %; and a content of 1-hexene derived units ranging from 20.0 wt. % to 30.0 wt. %;

wherein the polypropylene composition is endowed with:

i) a Melt Flow Rate: measured according to ISO 1133 (230 °C, 5 Kg) ranging from 0.5 to 5.0 g/10 min;
ii) a xylene soluble fraction at 25°C ranging from 4.0 wt% to 13.0 wt%;
iii) intrinsic viscosity of the fraction soluble in xylene at 25°C ranging from 1.5 dl/g to 3.5 dl/g

the sum of the amounts of A) and B) being 100.

DETAILED DESCRIPTION OF THE INVENTION

Thus an object of the present disclosure is a polypropylene composition comprising:

A) from 91 wt% to 97 wt%; , preferably from 92 wt% to 96 wt%; more preferably from 93 wt% to 95 wt% of a copolymer of propylene containing from 0.8 wt. % to 4.8 wt. %, preferably from 1.4 wt. % to 4.1 wt. %, more preferably from 1.8 wt. % to 3.6 wt. %; even more preferably from 1.9 wt. % to 2.9 wt. % of 1-hexene derived units; said random copolymers of propylene and 1-hexene having a Melt Flow Rate: measured according to ISO 1133 (230 °C, 5 Kg) ranging from 0.5 to 4.4 g/10 min; preferably from 0.6 to 3.7 g/10 min; more preferably from 0.7 to 2.3 g/10 min;

B) from 3 wt% to 9 wt%; , preferably from 4 wt% to 8wt%; more preferably from 5 wt% to 7wt% of a terpolymer of propylene ethylene and 1-hexene having a content of ethylene derived units ranging from 20.0 wt. % to 30.0 wt. %; preferably ranging from 22.0 wt. % to 28.0 wt. %; even more preferably from 23.0 wt. % to 27.0 wt. %; and a content of 1-hexene derived units ranging from 20.0 wt. % to 30.0 wt. %; preferably ranging from 22.0 wt. % to 28.0 wt. %; even more preferably from 23.0 wt. % to 27.0 wt. %;

wherein the polypropylene composition is endowed with:

i) xylene soluble fraction at 25°C ranging from 4.0 wt% to 13.0 wt%; preferably from 5.0 wt% to 12.0 wt%; more preferably from 6.0 wt% to 11.0 wt;

ii) melt flow rate, MFR, measured according to ISO 1133 at 230 °C with a load of 5.0 kg, comprised between 0.2 g/10 min and 2.0 g/10 min; preferably comprised between 0.4 g/10 min and 1.6 g/10; more preferably comprised between 0.7 g/10 min and 1.3 g/10;

iii) intrinsic viscosity of the fraction soluble in xylene at 25°C ranging from 1.5 dl/g to 3.5 dl/g; preferably ranging from 1.8 dl/g to 3.0 dl/g; mor preferably ranging from 2.2 dl/g to 2.9 dl/g;

the sum of the amounts of A) and B) being 100.

The term "copolymer" as used in the present patent application refers to polymers prepared by the polymerization of two different types of monomers such as propylene and 1-hexene. The term "terpolymer" as used in the present patent application refers to polymers prepared by the polymerization of three different types of monomers such as propylene, ethylene e and 1-hexene.

The polypropylene composition of the present disclosure can be advantageously used for the preparation of pipes, in particular pipes having an enhanced resistance to chlorine.

Thus a further object of the present disclosure is a pipe comprising the polypropylene composition of the present disclosure.

The term "pipe" as used herein also includes pipe fittings, valves and all parts which are commonly necessary for e.g. a hot water piping system. Also included within the definition are single and multilayer pipes, where for example one or more of the layers is a metal layer and which may include an adhesive layer.

In a further embodiment of the disclosure, the polypropylene composition further comprises an inorganic filler agent in an amount ranging from 0.5 to 60 parts by weight with respect to 100 parts by weight of the said polypropylene composition. Typical examples of such filler agents are calcium carbonate, barium sulphate, titanium bioxide and talc. Talc and calcium carbonate are preferred. A number of filler agents can also have a nucleating effect, such as talc that is also a nucleating agent. The amount of a nucleating agent is typically from 0.5 to 5 wt. % with respect to the polymer amount.

The polypropylene composition of the disclosure is also suitable for providing polypropylene pipes with walls of any configuration other than those with smooth inner and outer surface. Examples are pipes with a sandwich-like pipe wall, pipes with a hollow wall construction with longitudinally extending cavities, pipes with a hollow wall construction with spiral cavities, pipes with a smooth inner surface and a compact or hollow, spirally shaped, or an annularly ribbed outer surface, independently of the configuration of the respective pipe ends..

The polypropylene composition may be prepared in accordance with the well-known polymerization processes.

The process for preparing the previously said polypropylene composition can be carried out by a sequential polymerization comprising at least two sequential steps, wherein components A) and B) are prepared in separate subsequent steps, operating in each step, except the first step, in the presence of the polymer formed and the catalyst used in the preceding step. The catalyst is preferably added only in the first step, because its activity is usually such that it is still active for all the subsequent steps. The order of the polymerization stages is not a critical process feature, however component A) is preferably prepared before component B).

The polymerization can occur in liquid phase, gas phase or liquid-gas phase.

For example, it is possible to carry out the propylene polymerisation stage using liquid propylene as diluent, and the following copolymerisation stage in gas phase, without intermediate stages except for the partial degassing of the propylene.

Examples of suitable reactors are continuously operated stirred reactors, loop reactors, fluidized-bed reactors or horizontally or vertically stirred powder bed reactors. Of course, the reaction can also be carried out in a plurality of reactors connected in series.

It is possible to carry out the polymerisation in a cascade of stirred gas-phase reactors that are connected in series and in which the pulverulent reaction bed is kept in motion by means of a vertical stirrer. The reaction bed generally comprises the polymer that is polymerised in the respective reactor.

Reaction time, pressure and temperature relative to the polymerisation steps are not critical, however it is best if the temperature is from 20 to 150°C, in particular from 50 to 100° C. The pressure can be atmospheric or higher.

The regulation of the molecular weight is carried out by using known regulators, hydrogen in particular.

According to a particularly preferred embodiment the said polypropylene compositions are prepared by a sequential polymerization process comprising the preparation of component A) in a first gas-phase polymerization apparatus comprising two interconnected polymerization zones and a second step in which the propylene, ethylene-copolymer is prepared by polymerizing the monomers in a separate fluidized bed reactor.

A gas-phase polymerization apparatus performing the first step of the process is illustrated in patent application EP-A1-782587.

In detail, the said process comprises feeding one or more monomer(s) to said polymerisation zones in the presence of catalyst under reaction conditions and collecting the polymer product from the said polymerisation zones. In said process the growing polymer particles flow upward through one (first) of the said polymerisation zones (riser) under fast fluidisation conditions, leave said riser and enter another (second) polymerisation zone (downcomer) through which they flow downward in a densified form under the action of gravity, leave said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it becomes possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is affected below the point of reintroduction of the polymer into the said riser by the use, where appropriate, of gas distributor means. The velocity of transport gas into the riser is higher than the transport velocity under the operating conditions, and is preferably from 0.8 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerisation zones can be effected by metering the amount of polymer leaving the downcomer using means suitable for controlling the flow of solids, such as mechanical valves.

The operating parameters, such as the temperature, are those that are usual in gas-phase olefin polymerisation process, for example between 50 and 120° C.

The operating pressure can range between 0.5 and 10 MPa, preferably between 1.5 to 6 MPa.

Advantageously, at least one inert gas is maintained in the polymerisation zones, in such quantities that the sum of the partial pressures of the inert gases is preferably between 5 and 80% of the total pressure of the gas. The inert gas can be nitrogen or propane, for example.

The polymer leaving said first polymerization apparatus is discharged from the downcomer to a gas-solid separator then collected and transferred to the second stage which is preferably carried out in a conventional fluidized-bed gas-phase reactor operating under conventional conditions of temperature and pressure.

Preferably, the various catalyst components are fed to the riser at any point of the said riser. However, they can also be fed at any point of the downcomer. The catalyst can be in any physical state, therefore catalysts in either solid or liquid state can be used.

The preferred catalysts to be used in the polymerization process are Ziegler-Natta catalysts comprising a solid catalyst component including a titanium compound having at least one titanium-halogen bond, and an electron-donor compound, both supported on a magnesium halide in active form as preferred support, optionally with silica as co-support.

Catalysts having the above mentioned characteristics are well known in the patent literature; particularly advantageous are the solid catalyst components used in the catalysts described in patent documents US-A-4399054, EP-A2-045977 and EP-A2-395083.

The solid catalyst components used in the said catalysts comprise, as electron-donor compounds (internal electron-donor compounds), compounds selected from the group consisting of ethers, ketones, lactones, compounds containing N, P and/or S atoms, and esters of mono- and dicarboxylic acids. Particularly suitable electron-donor compounds are phthalic acid esters, such as diisobutyl, dioctyl, diphenyl and benzylbutyl phthalate, and esters of succinic acids.

Particularly suitable internal electron donor compounds are selected from succinates disclosed in international patent application WO-A1-00/63261.

Other electron-donors particularly suitable are 1,3-diethers described, for example, in European patent applications EP-A1-361493 and EP-A1-728769.

The preparation of the above mentioned catalyst components is carried out according to various methods. For example, a $MgCl_2 \cdot nROH$ adduct (in particular in the form of spherical particles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared. In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide. The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Ziegler-Natta catalysts also comprise a co-catalyst, i.e. an organoaluminum compound, such as an aluminum alkyl compound. An external donor is optionally added to the organoaluminium compound.

The Al-alkyl compounds used as co-catalysts comprise the Al-trialkyls, such as Al-triethyl, Al-triisobutyl, Al-tributyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates and in particular silicon compounds containing at least one Si-OR bond, where R is a hydrocarbon radical. Useful examples of silicon compounds are $(tert\text{-}butyl)_2Si(OCH_3)_2$, $(cyclopentyl)_2Si(OCH_3)_2$, $(cyclohexyl)$ $(methyl)$ $Si(OCH_3)2$ and $(phenyl)_2Si(OCH_3)_2$.

1,3-diethers having the formulae described above can also be used advantageously.

If the internal donor is one of these dieters, the external donors can be omitted.

Prior to the polymerisation process, the catalysts can be precontacted with small quantities of olefins (prepolymerisation), thus improving both the performance of the catalysts and the morphology of the polymers. Prepolymerisation is carried out maintaining the catalysts in suspension in a hydrocarbon solvent (hexane or heptane, for example) and polymerising at a temperature from ambient to 60°C for a time sufficient to produce quantities of polymer from 0.5 to 3 times the weight of the solid catalyst component. It can also be carried out in liquid propylene, at the temperature conditions indicated above, producing quantities of polymer that can reach up to 1000 g per g of catalyst component.

Articles, pressure pipes and related fittings according to the present disclosure are produced in a manner known per se, e.g. by (co-)extrusion or moulding, for instance.

Extrusion of articles can be made with different type of extruders for polypropylene, e.g. single or twin screw extruders.

The following examples are given to illustrate but not limit the present disclosure.

EXAMPLES

The following analytical methods were used to characterise the polymer compositions pipes obtained therefrom.

Melt Flow Rate: measured according to ISO 1133 (230 °C, 5 Kg).

[η] intrinsic viscosity: Determined in tetrahydronaphtalene at 135 °C.

Xylene-soluble fraction (XS) at 25°C

Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C. The Fraction of xylene solubles of component b) has been calculated according to the formula $XS_{tot}=Xs_AW_A+Xs_BW_B$; wherein Xstot is the soluble xylene fraction of the overall composition $Xs_A$ is the soluble xylene fraction of component A and $W_A$ is the amount of component A; Xss is the soluble xylene fraction of component B and $W_B$ is the amount of component B; wherein $W_A + W_B = 1$.

**Determination of 1-hexene content by NMR**

$^{13}$C NMR spectra are acquired on an AV-600 spectrometer operating at 150.91 MHz in the Fourier transform mode at 120°C. The peak of the propylene CH was used as internal reference at 28.83. The $^{13}$C NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program | ZGPG |
| Pulse Length (P1) | for 90° |
| Total number of points (TD) | 32K |
| Relaxation Delay | 15 s |
| Number of transients | 1500 |

The total amount of 1-hexene as molar percent is calculated from identified diad present in the measured NMR using the following relations:

$$[P] = PP + 0.5PH$$

$$[H] = HH + 0.5PH$$

Assignments of the $^{13}$C NMR spectrum of propylene/1-hexene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma} + S_{\alpha\delta}$ | PE |
| 5 | 35.70 -35.0 | $4B_4$ | H |
| 6 | 35.00 - 34.53 | $S_{\alpha\gamma} + S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |

(continued)

| Area | Chemical Shift | Assignments | Sequence |
|------|----------------|-------------|----------|
| 19 | 14.22 | CH$_3$ | H |

Determination of ethylene and 1-hexene content by NMR

$^{13}$C NMR spectra are acquired on an AV-600 spectrometer operating at 150.91 MHz in the Fourier transform mode at 120 °C. The peak of the propylene CH was used as internal reference at 28.83. The $^{13}$C NMR spectrum is acquired using the following parameters:

| | |
|--|--|
| Spectral width (SW) | 60 ppm |
| Spectrum centre (O1) | 30 ppm |
| Decoupling sequence | WALTZ 16 |
| Pulse program | ZGPG |
| Pulse Length (P1) | for 90° |
| Total number of points (TD) | 32K |
| Relaxation Delay | 15 s |
| Number of transients | 1500 |

Diad distibution is calculated according to the following relations:

$$PP = 100\ I1/\Sigma$$

$$PH = 100\ I2/\Sigma$$

$$HH = 100\ I3/\Sigma$$

$$PE = 100\ I4/\Sigma$$

$$EE = 100\ (0.5(\ I12 + I15) + 0.25\ I11)/\Sigma$$

Where

$$\Sigma = I1 + I2 + I3 + I4 + 0.5(\ I12 + I15) + 0.25\ I11$$

The total amount of 1-hexene and ethylene as molar percent is calculated from diad using the following relations:

$$[P] = PP + 0.5PH + 0.5PE$$

$$[H] = HH + 0.5PH$$

$$[E] = EE + 0.5PE$$

Assignments of the $^{13}$C NMR spectrum of propylene/1-hexene/ethylene copolymers

| Area | Chemical Shift | Assignments | Sequence |
|------|----------------|-------------|----------|
| 1 | 46.93 - 46.00 | S$_{\alpha\alpha}$ | PP |

(continued)

| Area | Chemical Shift | Assignments | Sequence |
|------|----------------|-------------|----------|
| 2 | 44.17 - 43.82 | $S_{\alpha\alpha}$ | PH |
| 3 | 41.30 | $S_{\alpha\alpha}$ | HH |
| 4 | 38.00 - 37.40 | $S_{\alpha\gamma} + S_{\alpha\delta}$ | PE |
| 5 | 35.70 | $4B_4$ | H |
| 6 | 35.00 - 34.53 | $S_{\alpha\gamma} + S_{\alpha\delta}$ | HE |
| 7 | 33.75 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.36 | $2B_4$ | H |
| 18 | 21.80 - 19.90 | $CH_3$ | P |
| 19 | 14.22 | $CH_3$ | H |

The amount of 1-hexene and ethylene in component B has been calculated by using the equations:

$$C_{6tot}=C_{6A}*A+C_{6B}*B$$

$$C_{2tot}=C_{2B}*B$$

Wherein $C_{6tot}$ is the amount of 1-hexene in the composition; $C_{6A}$ is the amount of 1-hexene in component A); $C_{6B}$ is the amount of 1-hexene in component B); $C_{2tot}$ is the amount of ethylene in the composition; $C_{2B}$ is the amount of ethylene in component B); and A and B are the amount of components A and B .

**Example 1**

**Preparation of the solid catalyst component**

Into a 500 mL four-necked round flask, purged with nitrogen, 250 mL of $TiCl_4$ were introduced at 0 °C. While stirring, 10.0 g of microspheroidal $MgCl_2 \cdot C_2H_5OH$ having average particle size of 40$\mu$m (prepared in accordance with the method described in example 1 of EP728769) and containing about 50%of EtOH, an amount of diethyl 2,3-diisopropylsuccinate in racemic form such as to have a Mg/succinate molar ratio of 12 was added. The temperature was raised to 100°C and kept at this value for 60min. After that the stirring was stopped, the liquid siphoned off and the treatment with TiCl4 was repeated at 110°C for 30 min. After siphoning, fresh TiCl4 and an amount of 9,9-bis(methoxymethyl)fluorene such as to have a Mg/diether molar ratio of 24 were added. Then the temperature was raised to 90°C for 30 min. After sedimentation and siphoning at 85°C the solid was washed six times with anhydrous hexane (6 x 100 ml) at 60 °C.

**Polymerization**

The catalyst system was formed by the catalyst component prepared as described above, triethylaluminium (TEAL) as co-catalyst and dicyclopentyldimethoxysilane as external donor, with the weight ratios indicated in the following Tables.

The propylene polymer compositions of the examples were prepared in a two-step polymerization process, wherein the random copolymer A) was prepared in the first polymerization step by feeding the monomers and the catalyst system into a gas-phase polymerization reactor comprising two interconnected polymerization zones, a riser and a downcomer, as described in the European Patent EP-A1-782587. The polymerization mixture was discharged from said reactor, conveyed to a gas-solid separator and the polymerized material was sent into a conventional gas-phase fluidized-bed reactor where the polymer of ethylene B) was produced..

The polymer particles exiting from the second polymerization step were subjected to a steam treatment to remove the unreacted monomers and dried the operative conditions are indicated in the Table1. The characteristics of the obtained polymer are reported on Table 2

Table1

|  |  | Ex 1 |
|---|---|---|
| TEAL/external donor | wt/wt | 7 |
| TEAL/catalyst | wt/wt | 6 |
| Temperature | °C | 83 |
| Pressure | Bar-g | 23 |
| Split holdup riser downcomer | wt. %<br>wt. % | 40<br>60 |
| H2/C3 riser | mol/mol | 0.003 |
| C6/(C6+C3) | mol/mol | 0.024 |
| MFR @ 5kg | g/10 min | 0.96 |
| C6 total content | wt. % | 2.2 |
| XS | wt. % | 2.0 |
| Tm | °C | 148 |
| **Component B** |  |  |
| Temperature | °C | 85 |
| Pressure | Bar-g | 14 |
| Split | % | 10 |
| C2/C2+C3 | Mol/mol | 0.24 |
| H2/C2 | Mol/mol | 0.048 |
| C6/C6+C3 | Mol/mol | 0.26 |
| C3=propylene; C2=ethylene; C6=1-hexene | | |

Table 2

|  |  | Example 1 |
|---|---|---|
| Component A |  |  |
| 1-hexene | Wt. % | 2.2 |
| MFR | g/10 min | 0.96 |
| XS | wt% | 1.7 |
| Component B |  |  |
| % component B | % | 6.2 |
| Ethylene | Wt. % | 25.9 |
| 1-hexene | Wt. % | 25 |
| Total polymer |  |  |

(continued)

| | | Example 1 |
|---|---|---|
| Component A | | |
| MFR | g/10 min | 0.96 |
| intrinsic viscosity of XS | dl/g | 2.60 |
| XS | wt% | 7.2 |

To the polymer produced in Example 1 and comparative example 2 the additives reported on table 3 have been added. Comparative example 2 is example 1 of WO 2020/069828

Table 3

| | %wt |
|---|---|
| DSTDP | 0.33 |
| TALC | 1.0 |
| CA STEARATE - M | 0.05 |
| IRGAFOS 168 | 0.11 |
| IRGANOX 1010 | 0.22 |
| IRGANOX 1330 | 0.11 |

Pipes having a diameter of 33 mm and 3 mm thick have been prepared with the polymer of example 1 and comparative example 2. Pipes have been subjected to chlorine resistance test according to ASTM F2023 - 13 using the following conditions:

Table4

| Pressure | 0.34 MPa (50psig) |
|---|---|
| temperature | 115°C |
| Chlorine concentration | 4.2 ppm |
| pH | 6.8 |
| ORP | 860 mV |

The results have been calculated on an average of 6 tests. Pipes of example 1 showed a resistance of 1798 hours vs pipes obtained with the polymer of example 2 showing a resistance of 1713 hours.

**Claims**

1.  A polypropylene composition comprising:

    A) from 91 wt. % to 97.0 wt. %, of a copolymer of propylene containing from 0.8 wt. % to 4.8 wt. % of 1-hexene derived units; said random copolymers of propylene having a Melt Flow Rate: measured according to ISO 1133 (230 °C, 5 Kg) ranging from 0.5 to 4.4 g/10 min;
    B) from 3 wt. % to 9 wt. % of a terpolymer of propylene ethylene and 1-hexene having a content of ethylene derived units ranging from 20.0 wt. % to 30.0 wt. %; and a content of 1-hexene derived units ranging from 20.0 wt. % to 30.0 wt. %;

    wherein the polypropylene composition is endowed with:

    i) a Melt Flow Rate: measured according to ISO 1133 (230 °C, 5 Kg) ranging from 0.5 to 5.0 g/10 min;
    ii) a xylene soluble fraction at 25°C ranging from 4.0 wt% to 13.0 wt%;

iii) intrinsic viscosity of the fraction soluble in xylene at 25°C ranging from 1.5 dl/g to 3.5 dl/g

the sum of the amounts of A) and B) being 100.

2. The polypropylene composition according to claim 1 wherein in component A) the content of 1-hexene derived units ranges from 1.4 wt. % to 4.1 wt. %,

3. The polypropylene composition according to claims 1 or 2 wherein in component A) the content of 1-hexene derived units ranges from 1.8 wt. % to 3.6 wt. %.

4. The polypropylene composition according to any of claims 1-3 wherein the content of ethylene derived units in component B ranges from 22.0 wt. % to 28.0 wt. %.

5. The polypropylene composition according to any of claims 1-4 wherein the amount of component A) ranges from 93 wt. % to 95 wt. % and the amount of component B ranges from 3 wt. % to 7 wt. %.

6. The polypropylene composition according to any of claims 1-5 having the Melt Flow Rate: measured according to ISO 1133 (230 °C, 5 Kg) ranging from 0.4 to 1.6 g/10 min.

7. The polypropylene composition according to any of claims 1-6 having the xylene soluble fraction at 25°C ranging from 5.0 wt% to 12.0 wt%.

8. The polypropylene composition according to any of claims 1-7 having the intrinsic viscosity of the fraction soluble in xylene at 25°C ranging from 1.8 dl/g to 3.0 dl/g;9.

9. A pipe comprising the polypropylene composition of claims 1-8.

10. A pressure pipe according to claim 9.

**Patentansprüche**

1. Polypropylenzusammensetzung, umfassend:

A) 91 Gew.% bis 97,0 Gew.% eines Copolymers von Propylen, welches 0,8 Gew.% bis 4,8 Gew.% von 1-Hexen abgeleitete Einheiten enthält; wobei die statistischen Copolymere von Propylen eine Schmelzflussrate, gemessen gemäß ISO 1133 (230 °C, 5 Kg), im Bereich von 0,5 bis 4,4 g/10 min aufweisen;
B) 3 Gew.% bis 9 Gew.% eines Terpolymers von Propylen, Ethylen und 1-Hexen mit einem Gehalt an von Ethylen abgeleiteten Einheiten im Bereich von 20,0 Gew.% bis 30,0 Gew.%; und einem Gehalt an von 1-Hexen abgeleiteten Einheiten im Bereich von 20,0 Gew.% bis 30,0 Gew.%;

wobei die Polypropylenzusammensetzung versehen ist mit:

i) einer Schmelzflussrate, gemessen gemäß ISO 1133, (230 °C, 5 Kg), im Bereich von 0,5 bis 5,0 g/10 min;
ii) einer in Xylol bei 25 °C löslichen Fraktion im Bereich von 4,0 Gew.% bis 13,0 Gew.%;
iii) einer Grenzviskosität der in Xylol bei 25 °C löslichen Fraktion im Bereich von 1,5 dl/g bis 3,5 dl/g;

wobei die Summe der Mengen von A) und B) 100 beträgt.

2. Polypropylenzusammensetzung nach Anspruch 1, wobei in Komponente A) der Gehalt der von 1-Hexen abgeleiteten Einheiten im Bereich von 1,4 Gew.% bis 4,1 Gew.% liegt.

3. Polypropylenzusammensetzung nach den Ansprüchen 1 oder 2, wobei in Komponente A) der Gehalt an von 1-Hexen abgeleiteten Einheiten im Bereich von 1,8 Gew.% bis 3,6 Gew.% liegt.

4. Polypropylenzusammensetzung nach einem der Ansprüche 1 bis 3, wobei der Gehalt an von Ethylen abgeleiteten Einheiten in Komponente B im Bereich von 22,0 Gew.% bis 28,0 Gew.% liegt.

**5.** Polypropylenzusammensetzung nach einem der Ansprüche 1 bis 4, wobei die Menge an Komponente A) im Bereich von 93 Gew.% bis 95 Gew.% und die Menge an Komponente B im Bereich von 3 Gew.% bis 7 Gew.% liegt.

**6.** Polypropylenzusammensetzung nach einem der Ansprüche 1 bis 5 mit einer Schmelzflussrate, gemessen gemäß ISO 1133, (230 °C, 5 kg), im Bereich von 0,4 bis 1,6 g/10 min.

**7.** Polypropylenzusammensetzung nach einem der Ansprüche 1 bis 6, wobei die in Xylol bei 25 °C lösliche Fraktion im Bereich von 5,0 Gew.% bis 12,0 Gew.% liegt.

**8.** Polypropylenzusammensetzung nach einem der Ansprüche 1 bis 7, wobei die Grenzviskosität der in Xylol bei 25 °C löslichen Fraktion im Bereich von 1,8 dl/g bis 3,0 dl/g liegt.

**9.** Rohr, umfassend die Polypropylenzusammensetzung nach den Ansprüchen 1 bis 8.

**10.** Druckrohr nach Anspruch 9.


**Revendications**

**1.** Composition de polypropylène comprenant :

A) 91 % en poids à 97,0 % en poids d'un copolymère de propylène contenant 0,8 % en poids à 4,8 % en poids de motifs dérivés de 1-hexène ; lesdits copolymères aléatoires de propylène présentant un indice de fluidité à chaud, mesuré selon la norme ISO 1133 (230 °C, 5 kg) situé dans la plage de 0,5 à 4,4 g/10 min ;
B) 3 % en poids à 9 % en poids d'un terpolymère de propylène, d'éthylène et de 1-hexène présentant une teneur en motifs dérivés d'éthylène située dans la plage de 20,0 % en poids à 30,0 % en poids ; et une teneur en motifs dérivés de 1-hexène située dans la plage de 20,0 % en poids à 30,0 % en poids ;

dans laquelle la composition de polypropylène est dotée de :

i) un indice de fluidité à chaud, mesuré selon la norme ISO 1133 (230 °C, 5 kg), situé dans la plage de 0,5 à 5,0 g/10 min ;
ii) une fraction soluble dans le xylène à 25 °C située dans la plage de 4,0 % en poids à 13,0 % en poids ;
iii) une viscosité intrinsèque de la fraction soluble dans le xylène à 25 °C située dans la plage de 1,5 dl/g à 3,5 dl/g

la somme des quantités de A) et B) valant 100.

**2.** Composition de polypropylène selon la revendication 1, dans laquelle, dans le constituant A), la teneur en motifs dérivés de 1-hexène est située dans la plage de 1,4 % en poids à 4,1 % en poids,

**3.** Composition de polypropylène selon les revendications 1 ou 2, dans laquelle, dans le constituant A), la teneur en motifs dérivés de 1-hexène est située dans la plage de 1,8 % en poids à 3,6 % en poids,

**4.** Composition de polypropylène selon l'une quelconque des revendications 1 à 3, dans laquelle la teneur en motifs dérivés d'éthylène dans le constituant B est située dans la plage de 22,0 % en poids à 28,0 % en poids.

**5.** Composition de polypropylène selon l'une quelconque des revendications 1 à 4, dans laquelle la quantité de constituant A) est située dans la plage de 93 % en poids à 95 % en poids et la quantité de constituant B est située dans la plage de 3 % en poids à 7 % en poids.

**6.** Composition de polypropylène selon l'une quelconque des revendications 1 à 5, présentant l'indice de fluidité à chaud, mesuré selon la norme ISO 1133 (230 °C, 5 kg) situé dans la plage de 0,4 à 1,6 g/10 min.

**7.** Composition de polypropylène selon l'une quelconque des revendications 1 à 6, présentant la fraction soluble dans le xylène à 25 °C située dans la plage de 5,0 % en poids à 12,0 % en poids.

**8.** Composition de polypropylène selon l'une quelconque des revendications 1 à 7, présentant la viscosité intrinsèque de la fraction soluble dans le xylène à 25 °C située dans la plage de 1,8 dl/g à 3,0 dl/g.

9. Tuyau comprenant la composition de polypropylène selon les revendications 1 à 8.

10. Tuyau de pression selon la revendication 9.

**EP 4 479 446 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020069828 A1
- EP 782587 A1
- US 4399054 A
- EP 045977 A2
- EP 395083 A2
- WO 0063261 A1
- EP 361493 A1
- EP 728769 A1
- EP 728769 A
- WO 2020069828 A